# EUROPEAN PATENT APPLICATION

(11) **EP 1 288 038 A2**
(43) Date of publication of application: **05.03.2003**
(21) Application number: 02078582.0
(22) Date of filing: 02.09.2002
(51) Int. Cl.: B60J 3/02

(54) **Sun visor with accessories for vehicles**

(30) Priority: 03.09.2001 IT MI20011853
(71) Applicant: Industrialesud S.p.A., 64100 Teramo (IT)
(72) Inventor: Di Sante Giuseppe, Roseto Degli Abruzzi, Teramo (IT); Biggio Mario, Roseto Degli Abruzzi, Teramo (IT); D'Ambrosio Patrizio, Roseto Degli Abruzzi, Teramo (IT); Bessone Giovanni, Villanova Mondovi, Cuneo (IT)
(74) Representative: De Gregori, Antonella

(57) **Abstract**

A sun visor (10) for vehicles, in which various elements or accessories (pen-holding support (4), glasses-holding support (3), support for magnetic cards (2), mirror (5), etc.) capable of being used as needed as an automobile is being driven, in order to increase the functional and aesthetic contents thereof; the various accessories can be inserted individually, totally or in combination with each other and their reciprocal position can vary according to the requirements of the user, of the designer and/or of the stylist.

## Description

The present invention refers to a sun visor with accessories for a vehicle.

In the sector of the automobile industry in particular, it is necessary, for each component to be produced or to be assembled, to optimise to the maximum the manufacturing and assembly costs, also increasing the overall reliability of the vehicle as much as possible.

Therefore, in each application, it is desirable to foresee the assembly of simple and functional elements, in extremely short periods of time with respect to the prior art and according to simple and reliable methods.

Furthermore, it is necessary that any assembly of the components for automobiles be carried out easy to use, functional and accessible for the end user to allow an advantageous use thereof.

In particular, it is desirable that such concepts be extended to the whole of the components of automobiles, both relative to the exterior elements of the vehicle and relative to those present inside the passenger compartment.

Regarding this, inside automobiles there are currently two sun visors, fixed to the roof panel coating in correspondence with the driver side and with the passenger side, each of which substantially consists of a foldable flap hinged at the upper inner edge of the windscreen; their function is exclusively that of sheltering the driver or the passenger from direct sunlight or from the reflection of the sun's rays and only some have, in a central portion, a small mirror, which can possibly slide away.

In the aforementioned requirement of being able to exploit as far as possible the components of an automobile, the general purpose of the present invention is that of realising an sun visor with accessories for vehicles, which allows it to be used so as to increase its functional and aesthetic contents, at the same time maintaining a substantial reliability and efficiency.

Another purpose of the present invention is that of realising a sun visor with accessories for vehicles which is particularly simple to construct and which allows a substantial reduction in the total costs, both for production and for storage and/or assembly, in virtue of the advantages and functions achieved.

A further purpose of the present invention is that of indicating a sun visor with accessories for vehicles which is more efficient, safe and extremely reliable with respect to the sun visors for vehicles realised according to the prior art.

These and other purposes, according to the present invention, are achieved by realising a sun visor with accessories for vehicles, according to claim 1, to which we refer for the sake of brevity.

Further characteristics and advantages of a sun visor with accessories for vehicles, according to the present invention, shall become clearer from the following description, given as an example and not for limiting purposes, referring to the attached schematic drawings, in which:
- figure 1 is a perspective and schematic view of a sun visor with accessories for vehicles, according to the present invention;
- figure 2 is a cross section view taken substantially at the centre of the sun visor with accessories according to the invention, in the conditions in which such a visor is positioned and mounted inside the vehicle and according to a first attachment embodiment;
- figure 3 is an analogous view to that of figure 2, in the conditions in which such a sun visor with accessories, according to the invention, is positioned and mounted inside the vehicle and according to a further attachment embodiment, which is an alternative with respect to that of figure 2.

With reference to the aforementioned figures, a sun visor with accessories for vehicles, in particular for automobiles, according to the present invention is generically indicated with 10.

The sun visor 10 can be realised, in particular, in "MULTIPUR" technology or equivalent; "MULTIPUR" technology, according to that which is described in EP patent application no. 01203676.0 of 27.09.2001, refers to a multilayer product which foresees a first element consisting of a layer of foamy, semi-rigid polymer which is impregnated on one or both faces with polyurethane resin and placed between two layers of fibreglass and/or natural fibre continuously coupled with the central layer.

Moreover, the first element is coupled with a second element comprising a layer of foamy, semi-rigid polymer which is impregnated on one or both faces with polyurethane resin and, in turn, coupled with a further layer of fibreglass and/or natural fibre.

It is obvious that alternative materials can be used in this context, in any case having determined requirements of lightness, ability to support itself, sound absorbency and flexibility and, in any case, constituting a structure with a variable thickness between 4 and 10 mm and a flat or curved shape in the longitudinal and transversal directions of the vehicle, according to the stylistic and functional requirements.

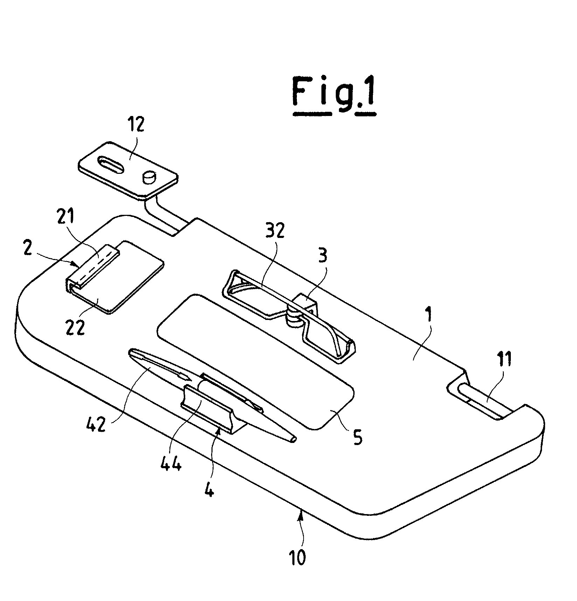

On the sun visor element 10 are mounted, according to the invention, a series of accessories, inserted in order to increase its functional and aesthetic contents; the overall image of the invention is represented in particular in figure 1.

The sun visor 10 has a hinge 11 and an attachment element 12 for assembling the visor 10 above the front cross member of the vehicle.

Moreover, according to exemplifying and preferred, but not limiting, embodiments of the invention, the inner surface 1 of the visor 10 (the one which faces the roof of the vehicle in folded position) foresees the application (usually by gluing) of a first accessory, made from flexible and rubber material, indicated with 2 and suitable for conserving and holding magnetic cards, such as "Viacard", "FastPay" and the like, suitable for the fast and simplified payment of motorway tolls.

The element or accessory 2 comprises a support 21, which has an upturned U-shaped section, with an upper lip preloaded on the lower one, so as to allow the fixing of the magnetic card 22 at the moment when it is inserted.

A second accessory of the sun visor 10 according to the invention can consist of a support element, indicated with 3, for a pair of glasses 32; the element 3 is made from flexible and rubber material and is stuck onto the surface 1 of the visor 10.

Finally, still according to exemplifying, but not limiting, embodiments of the invention, it is foreseen to install on the surface 1 of the visor 10 a support element 4, made from flexible and rubber material, suitable for holding a bullpen 42 or other similar cylindrical objects; the element 4 comprises a portion 44, with a semi-circular section, preloaded so as to allow the object inserted to be fixed.

Finally, a central space of the surface 1 of the sun visor 10 can be used for the application of a shaped make-up mirror, indicated with 5 in figure 1.

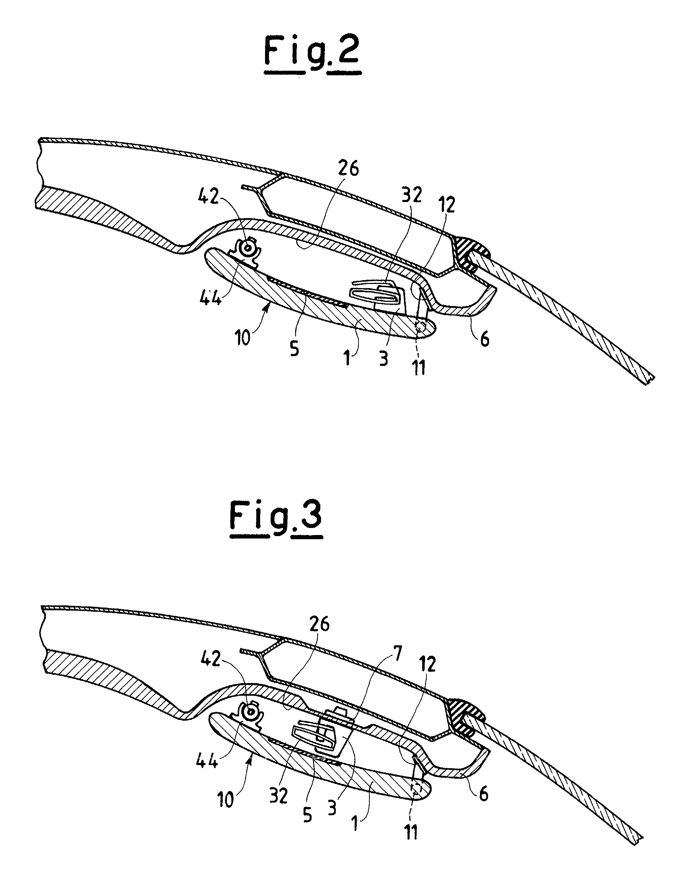

In figures 2 and 3 two possible diagrams of positioning and assembly of the sun visor 10 inside the passenger compartment of the vehicle are indicated.

According to that which is shown in figure 2, which represents a schematic section view carried out at about the halfway point of the sun visor 10, it is possible to note how the various elements or accessories foreseen on the surface 1 of the visor 10 according to the invention can be contained, according to a first embodiment, inside a space 26 formed in the roof panel coating 6 of the vehicle, without, in such a way, creating interference and/or reducing its reliability.

Alternatively, according to that which is shown in figure 3, which refers to the same positioning and assembly arrangement of the sun visor 10 inside the passenger compartment of the vehicle, the support for carrying glasses 3 can be fixed, instead of directly onto the surface 1 of the visor 10, onto the roof panel coating 6, through a lock nut 7.

It has thus been clarified how it is possible to increase the functional and aesthetic contents of a sun visor 10 for a vehicle, in such a way that it constitutes a support element for all objects which are indispensable during driving and which must always be within reach, when needed.

We believe it useful to also underline that the various accessories described can be inserted and mounted onto the visor 10 (through attachment means or gluing substances) individually, all together or variously combined with each other and that their reciprocal position can vary according to the requirements of the user, the designer and/or the stylist.

From the description which has been made the characteristics of the sun visor with accessories for vehicles, according to the present invention are clear, just as the advantages are also clear.

Finally, it is clear that further modifications and variants can be brought to the sun visor in question, all of which are covered by the inventive idea, just as it is clear that the materials and the sizes shown can be varied according to the technical requirements.

## Claims

1. Sun visor (10) for vehicles, of the type comprising at least one hinge (11) and at least one attachment means (12) for the assembly thereof at the top of the windscreen of the vehicle, in which, on at least one of the surfaces (1), a plurality of elements or accessories (2, 3, 4, 5) are inserted, capable of being used as needed as an automobile is being driven, in order to increase the functional and aesthetic contents of said sun visor (10).

2. Sun visor (10) according to claim 1, **characterised in that** said elements or accessories (2, 3, 4, 5) can be inserted individually, totally or variously combined with each other and their reciprocal position can vary according to the requirements of the user, of the designer and/or of the stylist.

3. Sun visor (10) according to claim 1, **characterised in that** it is realised according to a multilayer technology, said multilayer foreseeing at least one first element consisting of a layer of foamy, semi-rigid polymer which is impregnated on one or both faces with polyurethane resin and placed between two layers of fibreglass and/or natural fibre continuously coupled with the central layer, said first element being coupled with a second element comprising a layer of foamy, semi-rigid polymer which is impregnated on one or both faces with polyurethane resin and, in turn, coupled with a further layer of fibreglass and/or natural fibre.

4. Sun visor (10) according to claim 3, **characterised in that** said multilayer structure comprises materials having determined requirements of lightness, ability to support itself, sound absorbency and flexibility and, in any case, constituting a structure with a variable thickness between 4 and 10 mm and a flat or curved shape in the longitudinal and transversal directions of the vehicle, according to the stylistic and functional requirements.

5. Sun visor (10) according to claim 1, **characterised in that** an inner surface (1) of said visor (10), facing the roof of the vehicle in folded away position, foresees the assembly of at least one first accessory (2), made from flexible and rubber material suitable for conserving and holding magnetic cards (22), such as "Viacard", "FastPay" and the like, said first accessory (2) comprising a support (21) having a preloaded portion, so as to allow said magnetic card (22) to be fixed at the moment when it is inserted.

6. Sun visor (10) according to claim 5, **characterised in that** on said inner surface (1) there is also foreseen the insertion of a second accessory (3), consisting of an element for supporting a pair of glasses (32) made from flexible and rubber material.

7. Sun visor (10) according to claim 6, **characterised in that** said inner surface (1) of the visor (10) foresees the insertion of a further support element (4) made from flexible and rubber material and suitable for holding a bullpen (42) or other similar cylindrical objects, said support element (4) comprising at least one portion (44) which is preloaded in such a way as to allow the object inserted to be fixed.

8. Sun visor (10) according to claim 7, **characterised in that** on said inner surface (1) at least one shaped courtesy mirror (5) is fixed.

9. Sun visor (10) according to claim 1, **characterised in that** said elements or accessories (2, 3, 4, 5) foreseen on said surface (1) of the visor (10) are contained inside a space (26) formed in the roof panel coating (6) of the vehicle, so as to avoid interference or adaptability problems.

10. Sun visor (10) according to claim 9, **characterised in that** at least one of said elements or accessories (2, 3, 4, 5) foreseen on said surface (1) of the visor (10) is fixed on said roof panel coating (6), through a lock nut (7).
